(19) Europäisches Patentamt
European Patent Office
Office européen des brevets

(11) **EP 3 545 112 B1**

(12) **EUROPÄISCHE PATENTSCHRIFT**

(45) Veröffentlichungstag und Bekanntmachung des Hinweises auf die Patenterteilung:
**06.09.2023   Patentblatt 2023/36**

(21) Anmeldenummer: **17801440.3**

(22) Anmeldetag: **17.11.2017**

(51) Internationale Patentklassifikation (IPC):
**C21D 9/00** (2006.01)   **C21D 9/08** (2006.01)
**C21D 1/34** (2006.01)   **C21D 1/673** (2006.01)
**C21D 9/46** (2006.01)   **C21D 1/52** (2006.01)
**C21D 1/42** (2006.01)   **C21D 9/48** (2006.01)
**F27B 9/06** (2006.01)   **F27B 9/36** (2006.01)
**F27B 9/40** (2006.01)   **F27D 17/00** (2006.01)

(52) Gemeinsame Patentklassifikation (CPC):
**C21D 1/34; C21D 9/0068; C21D 9/085; C21D 9/48; F27B 9/067; F27B 9/36; F27B 9/40; F27D 17/004;**
C21D 1/42; C21D 1/52; C21D 1/673;
C21D 2221/00; Y02P 10/25

(86) Internationale Anmeldenummer:
**PCT/EP2017/079680**

(87) Internationale Veröffentlichungsnummer:
**WO 2018/095826 (31.05.2018 Gazette 2018/22)**

(54) **VERFAHREN ZUR SCHNELLERWÄRMUNG VON STAHLBLECHPROFILEN ODER STAHLROHREN MIT NACHFOLGENDER ABSCHRECKHÄRTUNG UND VORRICTHUNG ZUR SCHNELLERWÄRMUNG VON STAHLBLECHPROFILEN ODER STAHLROHREN**

METHOD OF FAST-HEATING OF STEEL SHEET PROFILES OR STEEL SHEET PIPES WITH THE FOLLOWING QUENCH HARDENING AND APPARATUS FOR FAST-HEATING OF STEEL SHEET PROFILES OR STEEL SHEET PIPES

PROCÉDÉ DE CHAUFFAGE RAPIDE DES PROFILES DE TÔLE EN ACIER OU DES TUBES DE TÔLE EN ACIER AVEC UNE TREMPE DE DURCISSEMENT SUIVANTE ET APPAREIL DE CHAUFFAGE RAPIDE DES PROFILES DE TÔLE EN ACIER OU DES TUBES DE TÔLE EN ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2016   DE 102016122540**

(43) Veröffentlichungstag der Anmeldung:
**02.10.2019   Patentblatt 2019/40**

(73) Patentinhaber:
• **voestalpine Stahl GmbH**
  **4020 Linz (AT)**
• **voestalpine Metal Forming GmbH**
  **3500 Krems an der Donau (AT)**

(72) Erfinder:
• **HASLMAYR, Michael**
  **4048 Puchenau (AT)**
• **ROUET, Christian**
  **3494 Gedersdorf (AT)**
• **SOMMER, Andreas**
  **73453 Abtsgmünd (DE)**

(74) Vertreter: **HGF**
**HGF Europe LLP**
**Neumarkter Straße 18**
**81673 München (DE)**

(56) Entgegenhaltungen:
**DE-A1- 3 536 609        DE-A1- 3 929 829**
**DE-A1- 4 401 228        DE-A1- 10 120 063**
**DE-A1-102010 049 640    DE-A1-102012 021 087**
**DE-A1-102014 204 639    DE-B3-102004 038 626**
**DE-B4-102010 049 640    JP-A- S6 250 407**
**US-A- 4 010 969**

**Beschreibung**

Die Erfindung betrifft ein Verfahren zum raschen Erwärmen von Stahlblechprofilen und Stahlrohren und eine Vorrichtung zum Schnellerwärmen von Stahlblechprofilen oder Stahlblechrohren.

Im Automobilbereich werden zur Erhöhung der Steifigkeit der Fahrgastzelle einerseits und zum Herabsetzen des Gewichts der Karosserie andererseits hochfeste Stahlteile eingesetzt, insbesondere als Längsträger, Schweller, Karosseriesäulen und dergleichen.

Für die Herstellung derartiger hochfester Bauteile werden grundsätzlich Stahlsorten verwendet, insbesondere so genannte Bor-Mangan-Stähle verwendet, die durch ein Austenitisieren des Stahls und anschließendes Abschrecken mit einer Geschwindigkeit über der kritischen Härtegeschwindigkeit, die in etwa bei 20 bis 25 K/sec liegt, gehärtet werden. Hierbei wird ein austenitisches Hochtemperaturgefüge des Stahles beim Abschreckhärten in ein überwiegend martensitisches Gefüge umgewandelt, welches eine hohe Härte und Zugfestigkeit bis hin zu 1500 MPa und mehr aufweist.

Es ist ferner bekannt, derartige Bauteile über die Länge oder die Breite mit Zonen unterschiedlicher Härte auszubilden. Dies kann dadurch erzeugt werden, dass bestimmte Bereiche der Platine nicht austenitisiert werden, so dass sie beim Abschreckhärten nicht martensitisch werden oder diese Teile nicht so schnell abgeschreckt werden, so dass sich dort lokal keine martensitische Struktur ergibt.

Generell sind zwei Verfahrensvarianten für die Herstellung dieser gehärteten Bauteile bekannt, es handelt sich hierbei einerseits um das Presshärten und andererseits um das Formhärten.

Beim Presshärten wird eine üblicherweise ebene Platine durch Erhitzen auf eine Temperatur oberhalb der Austenitisierungstemperatur (Ac$_3$) teilweise oder vollständig austenitisiert, anschließend in ein Warmumformwerkzeug überführt und im Warmumformwerkzeug mit einem einzelnen Pressenhub umgeformt und durch den Kontakt mit dem kalten Werkzeug gleichzeitig gehärtet.

Beim Formhärten wird eine ebene Platine zunächst kalt umgeformt, zum Beispiel in einer an sich bekannten fünfstufigen Pressenstraße und anschließend das umgeformte Bauteil auf die Austenitisierungstemperatur erhitzt und dann in einem Formhärtewerkzeug abgeschreckt und gehärtet. Im Formhärtewerkzeug findet hierbei keine oder zumindest keine nennenswerte Umformung mehr statt, sondern das Bauteil wird lediglich durch das vollflächige Anliegen an dem Werkzeug abgeschreckt.

Es ist darüber hinaus bekannt, derartige Stahlblechplatinen auch mit einer Vorbeschichtung aus einem Metall oder einer Metalllegierung zu verwenden. Dies können beispielsweise bekannte Aluminierungen, insbesondere Feueraluminierungen oder bekannte Verzinkungen, insbesondere Feuerverzinkungen sein.

Grundsätzlich besteht ein Bestreben die Erhitzung derartiger Platinen oder Bauteile möglichst schnell vonstattengehen zu lassen und andererseits derartige Bauteile nicht länger als notwendig der Hitze auszusetzen.

Für die Erwärmung stehen unterschiedliche Technologien zur Verfügung, wobei die gängigste Methode Durchlauföfen sind, durch die die Platinen oder einzelnen Bauteile insbesondere auf Gestellen geführt werden. Hierbei werden die Öfen mit offenen Brennern oder mit Brennerflammen in Strahlrohren oder elektrisch beheizt. Darüber hinaus ist es bekannt, Stahlblechplatinen induktiv aufzuheizen oder durch direkten Kontakt mit heißen Platten.

Aus der DE 10 2011 053 698 B3 ist ein Verfahren zur Herstellung von Struktur- und Chassisbauteilen durch Warmformen und Erwärmungsstation bekannt, wobei das Verfahren vorsieht, insbesondere Struktur- oder Chassisbauteile für ein Kraftfahrzeug durch Warm- oder Halbwarmumformen in eine gewünschte Form zu bringen, wobei eine Blechplatine in einer Erwärmungsstation wenigstens in einem ersten Bereich von einer Ausgangstemperatur auf eine Zieltemperatur erwärmt wird und anschließend die warme Platine in ein gekühltes Presswerkzeug überführt und darin umgeformt und pressgehärtet wird, wobei die Erwärmungsstation wenigstens eine Brennerzone mit wenigstens einem Brenner umfasst, in welcher die Blechplatine von der Ausgangstemperatur auf die Zieltemperatur erwärmt wird und wenigstens ein Brenner mit einem Brenngas und einem sauerstoffhaltigen Gas betrieben wird und die Blechplatine in direkten Kontakt mit der Brennerflamme kommt. Die Zieltemperatur soll dabei im Wesentlichen der Austenitisierungstemperatur des Grundwerkstoffs der Blechplatine entsprechen, die also auf Größe Ac$_3$ erwärmen. Die Blechplatine wird durch die Brenner mit hoher Geschwindigkeit und extrem hohem Wirkungsgrad erwärmt, dadurch dass die Platine in direktem Kontakt mit dem turbulent auf die Blechplatine stoßenden Brennerflammen steht und insbesondere vollumfänglich von den Flammen umhüllt wird. Hierdurch soll es möglich sein, einen sehr gleichmäßigen Temperaturverlauf in der Blechplatine einzustellen und somit auch eine gleichmäßige Oberflächenbeschaffenheit im Falle von vorbeschichtetem Material, sowie eine gleichmäßige Gefügeumwandlung zu erreichen. Insbesondere ist vorgesehen, die Erwärmungsstation derart zu gestalten, dass mehrere Brenner innerhalb wenigstens eines Brennerfeldes voneinander beabstandet angeordnet sind, wobei der Abstand zwischen den Brennern größer 30 mm ist. Dies soll einen ausreichenden Sicherheitsabstand zum Schutz vor gegenseitiger Beflammung, insbesondere aufgrund von Flammenrückschlag an der Blechplatine bewirken, andererseits aber auch eine ausreichend hohe Wärmestromdichte von 250 bis 2000 kW /m$^2$. Hierbei kann es vorgesehen sein, dass das Brennerfeld beweglich angeordnet ist und beispielsweise eine oszillierende Bewegung parallel der Ebene der Blechplatine vollzieht. Zudem soll es möglich sein, einzelne Brenner der Erwärmungsstation bezüglich der Höhe über der Blechplatine zu verstellen, so dass das Brennerfeld selbst nur durch die aktiven, nicht von der Platine zurückgesetzten Brenner gebildet wird.

Aus der DE 10 2010 049 640 B4 ist ein Werkzeug zum partiellen Wärmebehandeln eines metallischen Bauteils und Verfahren zum partiellen Wärmebehandeln eines metallischen Bauteils bekannt. Geschaffen werden soll ein Verfahren zum partiellen Wärmebehandeln und ein Werkzeug zur Durchführung des Verfahrens, bei dem die partiellen Wärmebehandlungsmöglichkeiten gegenüber bekannten Wärmebehandlungsmöglichkeiten mittels Induktion verbessert sind. Hierbei besitzt das Werkzeug einen ersten Induktor, welcher über einem Bereich angeordnet ist, in dem die partielle Wärmebehandlung erfolgen soll und ein Abstand A zu diesem Bereich besitzt, wobei auf der gegenüberliegenden Seite des Bereichs ein zweiter Induktor angeordnet ist. Bei den in dieser Schrift offenbarten Induktoren handelt es sich um sogenannte Flächeninduktoren.

Aus der DE 35 36 609 A1 ist eine Vorrichtung zur kontinuierlichen Wärmebehandlung von dünnwandigen und einen relativ großen Durchmesser aufweisenden Stahlrohren, welche aus einem das Rohr aufnehmenden Transportrollgang, einem das Rohr konzentrisch umschließenden und mit mehreren über den Umfang verteilt angeordneten Brennerdüsen versehenen Ringbrenner und bedarfsweise einem inneren und/oder äußeren Spritzring besteht. Die Brennerdüsen sind radial und senkrecht gegen das Rohr gerichtet und der Brenner ist auswechselbar und drehbar ausgebildet und mit einem Drehantrieb ausgerüstet, um die Vorrichtung rasch und ohne großen Aufwand den sich ändernden Rohrdurchmessern anpassen zu können.

Aus der DE 10 2010 049 640 A1 ist ein Werkzeug zum partiellen Wärmebehandeln eines metallischen Bauteils bekannt. Die Wärmebehandlung wird mittels Induktion durchgeführt, wobei die Induktoren einen mäandeförmigen Verlauf der Induktionsschleifen aufweisen. Ein mäandenförmige Verlauf einer ersten Induktionsschleife ist mit einem Versatz zu m mäandenförmigen Verlauf der zweiten Induktionsschleife angeordnet, so dass die jeweiligen Induktionsfelder von erstem Induktor und zweitem Induktor sich entsprechend ergänzen und somit ein homogener Wärmefluss auf das Bauteil sichergestellt wird.

Aus der US 4 010 969 A ist eine Stahlstoßstange bekannt, welche zum Zwecke der Härtung selektiv erhitzt und anschließend abgeschreckt wird. Dabei wird die Stahlstoßstange zwischen zwei Einspannoberflächen eingespannt und die zu härtenden Bereiche werden induktiv auf die Härtungstemperatur gebracht.

DE4401228 A1 offenbart ein Verfahren und eine Vorrichtung zum Abschrecken von Werkstücken. DE3929829 A1 offenbart ein Verfahren zum Abkühlen eines zylindrischen Hohlkörpers.

Ansonsten sind aus dem Stand der Technik die Erwärmung im Strahlungsofen bei etwa 910°C, Erdgas-Sauerstoff-Linienbrenner sowie Porenbrenner als Flächenbrenner bekannt, welche jedoch keine Strahlungswärme und keine Konvektion erzeugen, mit einem überhitzten Strahlungsofen vergleichbar sind.

Bei Strahlungsöfen ist von Nachteil, dass sie einen großen Flächenbedarf haben und die Erwärmung relativ langsam stattfindet. Bei Erdgas-Sauerstoff-Linienbrennern ist von Nachteil, dass diese zwar eine hohe Leistungsdichte haben, für Formzuschnitte aber ungeeignet sind. Sogenannte Porenbrenner haben eine geringe Leistungsdichte im Dauerbetrieb.

Aufgabe der Erfindung ist es, ein Verfahren zum raschen Erwärmen von Stahlblechprofilen oder Stahlrohren zu schaffen, mit denen diese schnell und im aufzuheizenden Bereich homogen erhitzt werden.

Die Aufgabe wird mit einem erfindungsgemäßen Verfahren mit den Merkmalen des Anspruchs 1 gelöst.

Vorteilhafte Weiterbildungen sind in den hiervon abhängigen Unteransprüchen gekennzeichnet.

Es ist eine weitere Aufgabe, eine Vorrichtung zum raschen Erwärmen von Stahlblechprofilen oder Stahlrohren zu schaffen, mit dem Stahlblechprofile oder Stahlrohre im zu erwärmenden Bereich besonders schnell und homogen erwärmt werden können.

Die Aufgabe wird mit einer erfindungsgemäßen Vorrichtung mit den Merkmalen des Anspruchs 14 gelöst.

Vorteilhafte Weiterbildungen sind in den hiervon abhängigen Unteransprüchen gekennzeichnet.

Erfindungsgemäß wird die Wärme in die Stahlblechprofile oder Stahlrohre punkt- oder linienförmig eingebracht, wobei eine oszillierende Relativbewegung zwischen Brenner und Stahlblechprofil oder Stahlrohr stattfindet. Es hat sich herausgestellt, dass die Temperaturverteilung hierdurch besonders gut homogenisiert werden kann.

Erfindungsgemäß wird eine überlagerte Oszillation durchgeführt, translatorisch, rotatorisch oder eine Kombination von beiden, bei der eine Grundschwingung von einer höher frequenten Oberschwingung überlagert wird.

Besonders bevorzugt sind möglichst gleichmäßige Bewegungen um die Beschleunigungskräfte gering zu halten, beispielsweise möglichst kreisförmige, linear sinusförmige oder doppelt kreisförmige Oszillationsmuster.

Um die Wärme bzw. Energie in die Stahlblechprofile oder Stahlrohre einzubringen, werden mehrere Punkt- oder Linienbrenner im Verbund als Flächenbrenner wirkend verwendet, die umseitig auf die Stahlblechprofile oder Stahlrohre einwirken.

Alternativ hierzu können insbesondere punkt- oder linienförmig erwärmend wirkende Querfeldinduktoren eingesetzt werden, die umseitig auf die Stahlblechprofile oder Stahlrohre angeordnet sind und punkt- bzw. linienförmig auf diese einwirken (im Gegensatz zu Flächeninduktoren).

Hierbei erfolgt die Schnellerwärmung bis zur Zieltemperatur von >870°C (Ac$_3$ des Stahlgrundmaterials) sehr homogen.

In der erfindungsgemäßen Vorrichtung erfolgt die Oszillation durch eine Oszillation der Brenner- oder Induktoranordnung. Der Frequenzbereich der Oszillation reicht von 0,46 bis 4,7 Hz und das Verhältnis der Grundschwingung zur Oberschwingung beträgt vorzugsweise 1:1 bis 1:10, vorzugsweise mindestens 1:5.

Bevorzugt wird im sogenannten "stop and go" Verfahren eine entsprechende oszillierende Erwärmung vorgenommen.

Besonders vorteilhaft ist dieses Verfahren bei der Herstellung von TPP Bauteilen.

Die Erfindung wird anhand einer Zeichnung beispielhaft erläutert. Es zeigen dabei:

Figur 1     stark schematisiert, ausschnittsweise eine Brenneranordnung nach einem Versuchsaufbau;
Figur 2     die Anordnung nach Figur 1 in einer seitlichen Ansicht;
Figur 3     die Anordnung nach Figur 2 in einer Ansicht von unten;
Figur 4     ein Brennerfeld in einer Draufsicht;
Figur 5     die Anordnung eines Brennerfeldes als integraler Bestandteil eines Strahlungsofens;
Figur 6     eine Wärmebilddarstellung der nicht erfindungsgemäßen Wärmeverteilung bei einer überlagerten Oszillation der Platine;
Figur 7     stark schematisiert die zeichnerische Darstellung der Oszillationsbewegung;
Figur 8     die Inhomogenität der Wärmeverteilung über die Amplitude der Bewegung und den Abstand der Brenner;
Figur 9     die Inhomogenität über den Radius der kleinen Schwingung im Verhältnis zum Radius der großen Schwingung;

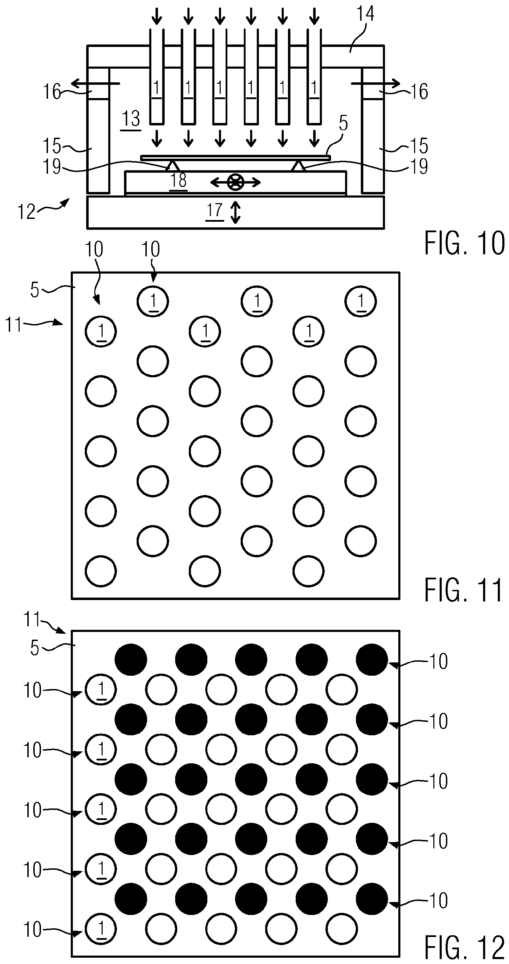

Figur 10    stark schematisiert eine Vorrichtung mit Brennern;
Figur 11    ein wabenartiges Brennerfeld (bevorzugt bei einseitige Erwärmung);
Figur 12    ein rechteckförmiges nicht erfindungsgemäßes Brennerfeld mit versetzt angeordneten Brennern, die von beiden Seiten auf die Platine einwirken;

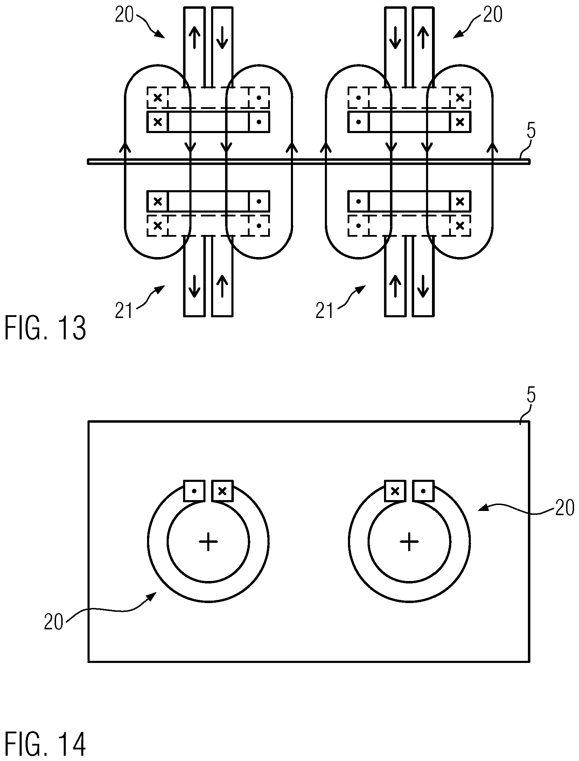

Figur 13    beidseitig des Stahlblechprofils oder Stahlrohrs angeordnete Querfeldinduktoren;
Figur 14    die Querfeldinduktoren in einer Draufsicht von oben.

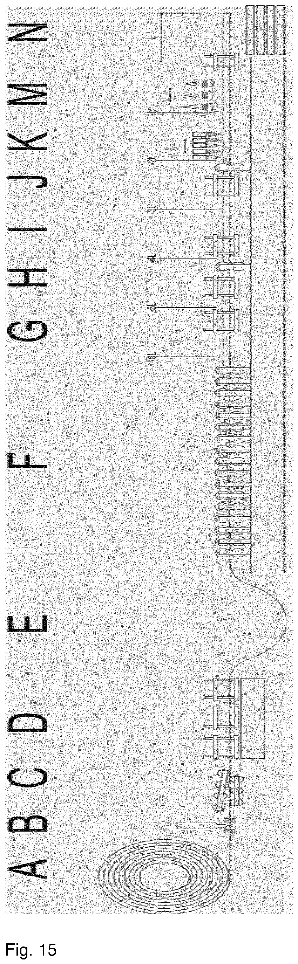

Figur 15    zeigt eine Vorrichtung zum Erzeugen von Stahlprofilen oder Stahlrohren im Start-Stop-Betrieb, bestehend aus den klassischen Profiliermaschinenkomponenten A...F, N bestehend aus Haspel, Schopfschere, Richtmaschine, Vorlaufstanze, Schlingengrube, Profilierstrecke und Ablängeinheit, ergänzt um den gesamten Nachlaufmaschinentisch (G...K, M). In der gezeigten Abbildung verfügt die Profilieranlage über 6 Nachbearbeitungspositionen, die ersten 4 (G...J) werden für Präge- und Stanzoperationen benutzt, die letzten beiden führen die erfindungsgemäße Wärmebehandlung durch. In der vorletzten Position K erfolgt die oszillierende Erwärmung, in der letzten Position M erfolgt die Abkühlung vor dem endgültigen vereinzeln in der Ablängeinheit N. Zur Ergänzung noch die Legende zu Figur 15:

A     Haspel
B     Schopfschere
C     Richtmaschine
D     Vorlaufstanze
E     Schlingengrube
F     Profiliermaschine
G     Nachlauf-Werkzeugposition -6L
H     Nachlauf-Werkzeugposition -5L
I     Nachlauf-Werkzeugposition -4L
3     Nachlauf-Werkzeugposition -3L
K     oszillierende Erwärmungszone in Position -2L
L     Bauteillänge
M     oszillierende Kühlzone in Position -L
N     Ablängaggregat

Die Oszillation ist für Linienbrenner/-Induktoren eine lineare Sinusschwingung und damit als horizontaler Pfeil gezeichnet, für punktförmige Brenner/Induktoren mit der erfindungsgemäßen überlagerten Rotationen.

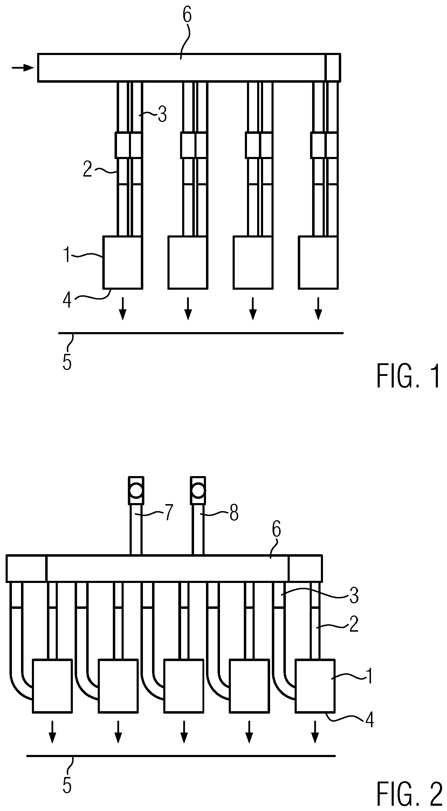

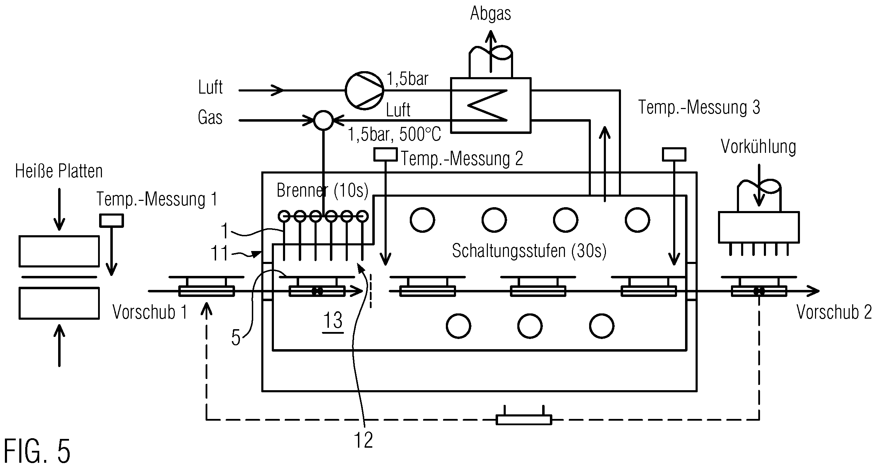

Für die erfindungsgemäße Erwärmung werden beispielsweise Brenner 1 eingesetzt, wobei die Brenner 1 in einem Brennerfeld 11 angeordnet werden (Figuren 1, 5).

Als Brenngas kann beispielsweise Erdgas mit reinem Sauerstoff als Oxidator verwendet werden, optional kann zur Reduktion der Verbrennungstemperatur Luft und/oder Wasser bzw. Wasserdampf beigemischt werden um eine Schädigung (Verbrennung) der Zinkschicht bzw. des Grundmaterials an exponierten Stellen zu vermeiden. Bevorzugt erfolgt die Verbrennung bei 40 % bis 100% Sauerstoffanteil in der mit dem Brenngas beigemischten Oxidationsgases, der Verbrennungsluft. Durch Regelung des Sauerstoffanteils in der Verbrennungsluft kann die Verbrennungstemperatur beeinflusst werden, da die Kühlwirkung des Stickstoffes reduziert werden kann. Insbesondere haben sich Sauerstoffanteile von 21 % (bei "normaler" Luft) bzw. 40 % bis 60 % bewährt.

Vorzugsweise werden punktförmige Brennerköpfe mit einer Leistung von 1 bis 100 kW je Brennerkopf mit einem Durchmesser von 10 bis 100 mm, besonders bevorzugt 30 mm Durchmesser bei 10 kW Leistung je Brennerkopf verwendet oder linienförmige Brennerköpfe mit einer Nennleistung 1-100kW und einer Breite von 5-100mm, vorzugsweise 10mm Breite und etwa 3-5kW Leistung pro 10mm Brennerlänge.

Die Brenner 1 sind hierbei voneinander beabstandet, wobei zwischen den Brennern 1 (Figuren 2-4) Abstände verbleiben.

Die Abstände zwischen den Brennern 1 sind so gewählt, dass die Brenner punkt- oder linienförmig auf das Stahlblechprofil oder Stahlrohr einwirken können. Die Abstände sind dabei so bemessen, dass zwischen den Brennern das heiße Brenngas zurückströmen kann, so dass Querströmungen über das gesamte Brennerfeld 11 möglichst vermieden werden. Hierbei kann insbesondere dafür Sorge getragen werden, dass durch eine passive Abgasführung oder ein aktives Absaugen die gewünschte Rückströmung zwischen den Brennern 1 stattfindet. Es haben sich beispielhaft Abstände von 10 bis 200 mm, vorzugsweise 60 mm zwischen den einzelnen Brennerköpfen als vorteilhaft erwiesen. Der Abstand der Platine zu den Brennern kann nicht erfindungsgemäß zwischen 20 bis 80 mm betragen, besonders bevorzugt etwa 60 mm.

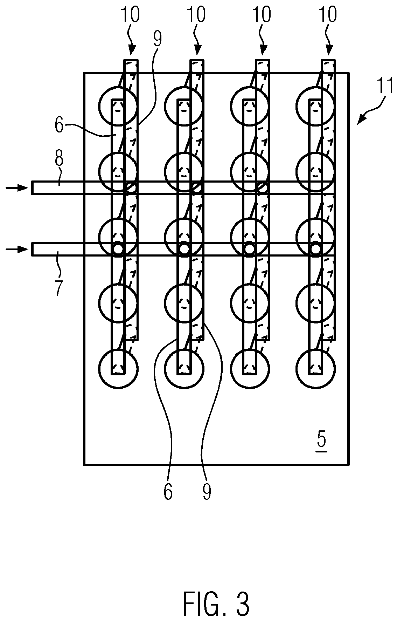

Die Brenner 1 besitzen hierbei insbesondere je eine Zuleitung 2 für Brennstoff und eine Zuleitung 3 für Luft, Sauerstoff oder ein sauerstoffhaltiges Gas, wobei diese Zuleitungen 2, 3 rückseitig und/oder seitlich in den Brenner 3 münden und der Brenner 1 mit seiner rohr-/profilseitigen Brennerkopffläche 4 zu einer Stahlrohr/Stahlblechprofilfläche 5 weist. Eine Mehrzahl von Brennern 1 kann hierbei über eine gemeinsame Versorgungsleitung 6 mit Brennstoff versorgt werden, wobei eine Mehrzahl von gemeinsamen Zuleitungen 6 über eine Brennstoffleitung 7 mit Brennstoff versorgt werden kann (Figur 3).

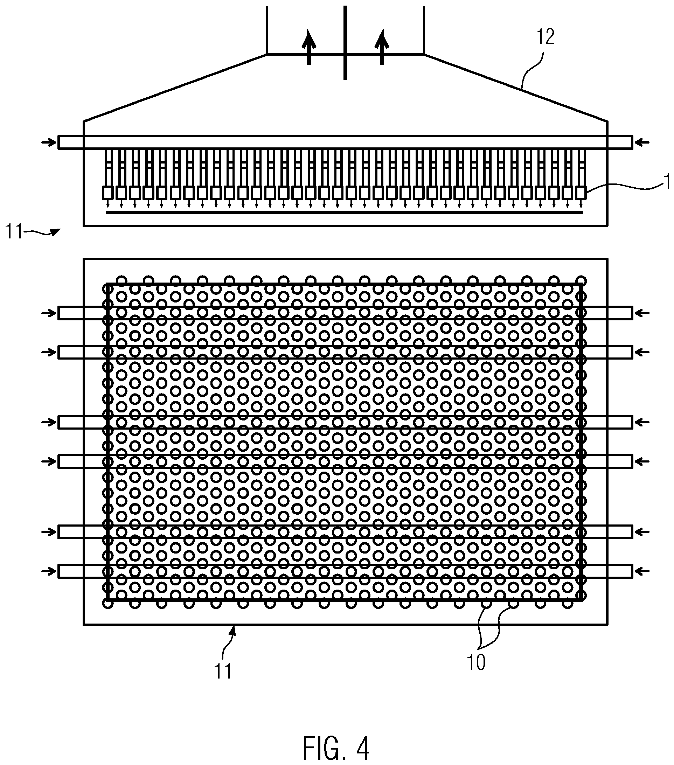

Zudem können die Zuleitungen 3 für Luft, Sauerstoff oder ein sauerstoffhaltiges Gas über eine gemeinsame Zuleitung 9 mit der Luft, dem Sauerstoff oder dem sauerstoffhaltigen Gas versorgt werden, wobei die Leitungen 9 wiederum mit einer Sauerstoff- oder Luftzuleitung 8 versorgt werden. Dem entsprechend können entlang der Leitungen 6, 9 die Brenner als Brennerreihen 10 ausgebildet sein. Die Brennerreihen 10 eines Brennerfeldes 11 können dabei auch versetzt zueinander angeordnet sein (Figur 4).

Die Brenner 1 eines Brennerfeldes 11 können hierbei einzeln, in Reihen und/oder als gesamtes Brennerfeld 11 auf ein Stahlblechprofil oder Stahlrohr 5 zu bewegbar oder vom Stahlblechprofil oder Stahlrohr 5 abhebbar sein. Somit können die Brennerabstände zum Stahlblechprofil oder Stahlrohr einzeln, in Reihen oder als ganzes Brennerfeld geregelt werden.

Bei den Brennern 1 ist es, wie bereits ausgeführt, nicht erfindungsgemäß vorgesehen, dass die Brenngase, die auf die Platine 5 treffen, zwischen den Brennern 1 wieder zurückgeführt werden, um Querströmungen möglichst zu verhindern. Hierzu kann das Brennerfeld 11 über eine entsprechende Einhausung 12 verfügen, die beispielsweise das Brennerfeld 11 umgibt und nach oben kaminartig ausgebildet ist, so dass ein Zug entsteht, der die Brenngase zwischen den Brennern 1 zu einer Richtung hinter den Brennern 1 weg befördert. Hierzu kann insbesondere es auch vorgesehen sein, die Brenngase mit einer entsprechenden Vorrichtung, wie einem Lüfter, aktiv abzusaugen und die heißen Brenngase z. B. entsprechend einem Rekuperator zur Vorwärmung der Brennluft zuzuführen.

Das Brennerfeld 11 kann hierbei alleine dafür vorgesehen sein, ein Stahlblechprofil oder Stahlrohr 5 aufzuheizen.

Erfindungsgemäß erfolgt die Aufheizung mit den Brennern 1 nicht alleine durch ein Beaufschlagen des Stahlblechprofils oder Stahlrohrs 5 mit Brenngasen aus dem jeweiligen Brenner 1, sondern die Aufheizung wird von einer Bewegungskomponente überlagert. Erfindungsgemäß wurde herausgefunden, dass sich eine besonders gute Homogenisierung der Wärmeverteilung dann erzielen lässt, wenn die Brenner während der Beaufschlagung über/unter dem ruhenden Profilstrang in ihrer Ebene oszillieren, d.h., in einer Ebene quer zur Ausströmrichtung der Brenner 1.

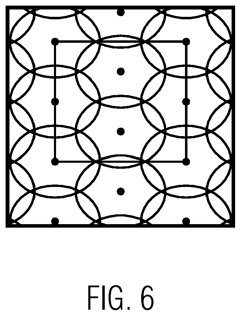

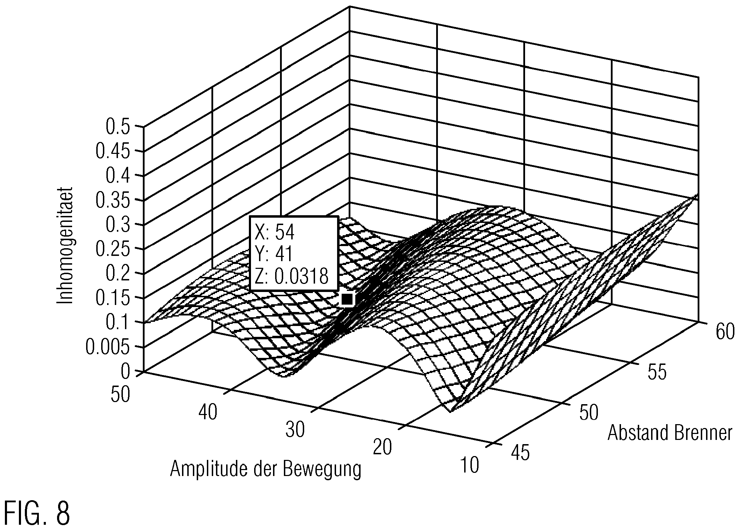

Die nicht erfindungsgemäße Wärmeverteilung durch Oszillation ist in Figur 6 dargestellt, in Figur 8 ist die Amplitude der Bewegung, der Brennerabstand und die Inhomogenität gegeneinander aufgeführt, wobei man erkennt, dass hierbei Inhomogenitätssenken und Inhomogenitätshöhen vorhanden sind, so dass auch durch empirische Versuche eine ideale Amplitude, ein idealer Brennerabstand herausgefunden werden können, welche die Inhomogenität erheblich absenken.

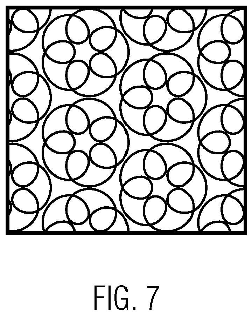

In Figur 7 ist die Oszillation zeichnerisch dargestellt, wobei erfindungsgemäß eine Oszillationsbewegung möglich ist und hierdurch sehr gute Homogenitätswerte erzielt werden.

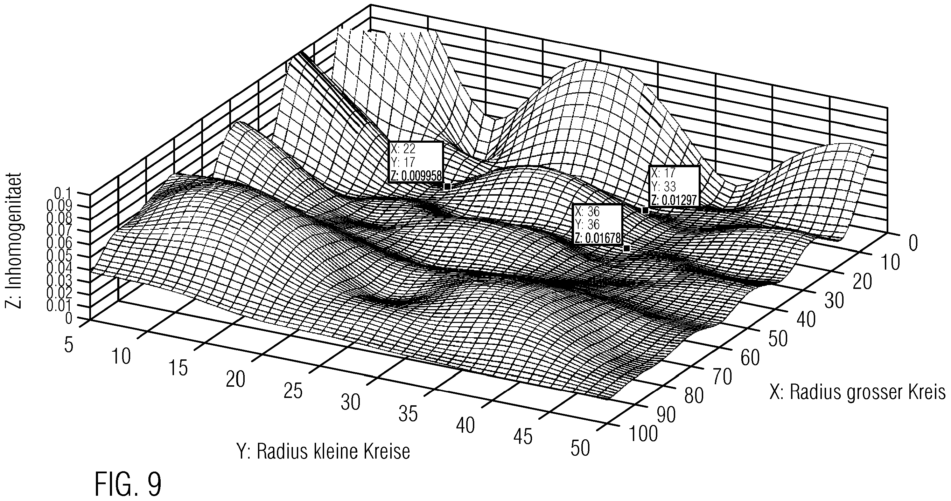

Erfindungsgemäß hat sich herausgestellt, dass die Homogenität besonders gut gelingt, wenn bei punktförmigen Wärmequellen zwei Schwingungen überlagert werden. Beispielsweise wird eine Grundschwingung mit 0,5 Hz von kleinen Schwingungen überlagert, die etwa 2 Hz betragen. Die Schwingbewegung ist hierbei in Figur 7 gezeigt, wobei die Ergebnisse in Figur 9 gegenübergestellt sind. Hier ist wiederum die Inhomogenität gegen den Radius der großen Oszillation und den Radius der kleinen Oszillation abgestimmt, wobei man hier sehr gute Zusammenhänge erkennt und wiederum Inhomogenitätssenken deutlich sichtbar sind, die entsprechend aufgesucht werden können.

Eine entsprechende Anlage 12 zur Durchführung der erfindungsgemäßen Beheizung mit Brennern besitzt beispielsweise einen nach unten offenen Ofenraum 13, wobei durch eine Ofendecke 14 die Brenner 1 durchgreifend in den Innenraum ragen. Zudem sind Seitenwandungen 15 vorhanden, welche Abgasaustritte 16 besitzen.

Neben der erfindungsgemäßen Aufheizung mit Brennern 1 ist es auch möglich, die Aufheizung mit Querfeldinduktoren durchzuführen. Hierbei sind die Querfeldinduktoren 20, 21 oberhalb und unterhalb der Rohrebene angeordnet und wirken gemeinsam, eine entsprechende Induktion erzeugend, auf das Stahlblechprofil oder Stahlrohr 5, ähnlich wie die Brenner punkt- oder linienförmig ein. Dem entsprechend ist eine Mehrzahl von Induktoren 20 zu Induktorreihen (nicht gezeigt) zusammengefasst und mehrere Induktorreihen ergeben ein Induktorfeld, wobei ein Induktorfeld auf der Oberseite des Stahlblechprofils oder Stahlrohrs ein Induktorfeld mit Induktoren 21 unterhalb der Rohrebene angeordnet ist, wobei immer ein Induktor 20 fluchtend zu einem Induktor 21 angeordnet ist.

Bei der Erfindung ist von Vorteil, dass sowohl bei der solitären Beheizung eines Stahlblechprofils oder Stahlrohrs mit einem Brennfeld, wobei die Brenner oszillieren, eine hervorragende homogene Wärmeverteilung erzielt wird, wobei die Beheizung in sehr kurzer Zeit, d.h. mit hoher Geschwindigkeit und daher schonend für das aufzuheizende Metall stattfindet.

In vorteilhafter Weise kann auch ein Feld von Querfeldinduktoren entsprechend eingesetzt werden.

Ein weiterer Vorteil der Verwendung der Brennerfelder oder Querfeldinduktorenfelder ist, dass bei einer Unterbrechung des Prozesses aufgrund von Ausfällen, Wartungsarbeiten oder dergleichen im Gegensatz zum Stand der Technik keine Stahlblechprofile oder Stahlrohre in einem Ofen verbleiben, dort zu lange aufgeheizt und dann verworfen werden müssen, sondern das Aufheizen der Stahlblechprofile oder Stahlrohre, welches sehr schnell erfolgt, einfach eingestellt wird und abgewartet wird, bis die Linie wieder frei produzieren kann. Hierdurch wird Ausschuss vermieden bzw. verringert.

Bei der Verwendung von einzeln abhebbaren Brennern oder einzeln abhebbaren Brennerreihen ist von Vorteil, dass durch eine entsprechende Ausgestaltung des Brennerfeldes mit in Richtung Stahlblechprofil oder Stahlrohr feuernden Brennern und abgehobenen, nicht zur Stahlblechprofil oder Stahlrohr feuernden Brennern, Teile mit unterschiedlichen mechanischen Eigenschaften dadurch hergestellt werden können, dass bestimmte Bereiche der Stahlblechprofile oder Stahlrohre nicht aufgeheizt und damit nicht austenitisiert werden und somit auch beim Abschrecken nicht gehärtet werden können.

Diese sogenannten TPP Bauteile (tailored property parts) können besonders effektiv hergestellt werden, wenn in den Bereichen der Stahlblechprofile oder Stahlrohre die nicht austenitisiert werden sollen nicht nur die Brenner entfernt werden bzw. nicht aufheizen sondern darüber hinaus bereichsweise eine Kühlvorrichtung bsp. Kühldüsen vorgesehen ist um eine aktive Kühlung dieses Bereichs zu gewährleisten. Anstelle des Entfernens eines oder mehrerer Brenner können diese auch abgeschaltet und von Kühlgas durchströmt werden, so dass der Brenner als Kühldüse dient.

Hierbei hat sich herausgestellt, dass die erfindungsgemäße Anordnung von Brennern und die erfindungsgemäße Oszillation zusätzlich eine hohe Trennschärfe zwischen nicht aufgeheizten, nicht zu härtenden Bereichen und aufgeheizten und zu härtenden Bereichen ermöglicht.

In gleicher Weise können selbstverständlich Querfeldinduktoren in Bereichen, die nicht aufgeheizt werden sollen, abgeschaltet werden, so dass hier keine Induktion und damit auch keine Erhitzung stattfindet. Auch hierbei kann durch die Verwendung der Querfeldinduktoren Felder mit abgeschalteten Querfeldinduktoren und der überlagerten Oszillation eine sehr große Trennschärfe erreicht werden.

Besonders bevorzugt kann die Schnellerwärmungseinrichtung zur Erwärmung von Stahlblechprofilen oder Rohren angewandt werden wenn hierzu im sogenannten "stop and go" Verfahren eine entsprechende oszillierende Erwärmung vorgenommen.

Besonders vorteilhaft ist dieses Verfahren bei der Herstellung von TPP Bauteilen, die eine intensive Bearbeitung nach der eigentlichen Profilierung erfordern. Diese Bearbeitung kann Stanzen oder Prägen und dergleichen beinhalten.

Es ist vorteilhaft, wenn nach den oben beschriebenen Verfahren Stahlblechprofile oder Stahlblechrohre entsprechend rasch erwärmt werden.

Im Gegensatz zum kontinuierlichen Betrieb in einer Profilieranlage bleibt hierbei erfindungsgemäß das Band planmäßig stehen und fährt immer um definierte Beträge weiter. Ein solches Verfahren ist auch als Start-Stop-Betrieb bekannt. Einfachste Profilieranlagen längen in dieser Weise nur ab, besitzen also keine fliegende Säge, komplexere Anlagen nutzen jeden Halt des Bandes, um eine Vielzahl von Bearbeitungsoperationen durchzuführen, die bei Verwendung einer fliegenden Trenneinrichtung nicht möglich wären.

Bei der erfindungsgemäßen Erwärmung eines kontinuierlichen Stahlblechprofil- oder Stahlrohrstranges kann bei einfacheren Geometrien auf Linienbrenner oder -induktoren mit nur einachsiger Oszillation während des Bandstillstandes zurückgegriffen werden.

Bei komplex geformten Profilen kann es sein, dass an Stelle von Querfeldinduktoren Linien- oder Mäanderinduktoren eingesetzt werden müssen, da die Zugänglichkeit der zu erwärmenden Stelle sonst nicht gegeben ist. Das hat aber keinen Einfluss auf die Art bzw. Notwendigkeit der Oszillation und das damit verbundene gleichmäßige Erwärmungsergebnis. Ähnliches gilt für Längsfeldinduktoren, wenn die unterschiedlichen Härtezonen einander nur in Stahlblechprofil- oder Stahlrohrlängsrichtung berühren.

Flächeninduktoren sind zwar prinzipiell auch möglich in Kombination mit einachsiger Oszillation, jedoch hat sich gezeigt, dass hier der Kopplungsabstand zum Profilstrang nur mit exzessiven Maßnahmen kontrolliert werden kann, was sich als in der Praxis nicht praktikabel herausgestellt hat. Allerdings ist mit Verlassen von im Wesentlichen punktförmigen Wärmequellen eine gezielte Erwärmung in Kombination mit einem Lochbild oder Ausklinkungen nicht mehr möglich. Doppelt oszillierende punktförmige Brennerfelder sind damit einzig in der Lage, den erforderlichen Flexibilitätsgrad bei komplexen Stahlblechprofil- oder Stahlrohrgeometrien zu erfüllen.

Generell gilt hier, bei Verwendung von linienartigen, mäanderartigen oder um die Längsrichtung gewickelten induktiven Erwärmungsmitteln, muss die Amplitude im Bereich der Größenordnung des Windungsabstandes bzw. Induktorabstandes bei Verwendung mehrerer Linearinduktoren in einer Erwärmungszone sein (0.5-3x).

Beim erfindungsgemäßen Inline-Härten im Start-Stop-Betrieb wird während eines oder mehrerer Anlagenhalte das Stahlblechprofil oder Stahlrohr geprägt, gelocht, ausgeklinkt oder weiteren Bearbeitungsschritten unterworfen. Spätestens während des vorletzten Anlagenhaltes wird das Stahlblechprofil oder Stahlrohr im zu härtenden Bereich erwärmt mit dem oben beschriebenen erfindungsgemäßen Verfahren über Brenner oder Induktoren. Beim letzten Anlagenhalt spätestens wird das entsprechende Stahlblechprofil oder Stahlrohr im selben Bereich abgeschreckt.

Bei dieser Art der Profilierung wird in vorteilhafter Weise immer um eine Bauteillänger das Band in der Anlage vorwärts nicht erfindungsgemäß bewegt. Vorteilhaft ist hier, dass sehr leicht hochkomplexe und genaue Lochbilder, für Prägungen und Ausklinken mit bereichsweise gehärteten Zonen kombiniert werden können.

Bei einer solchen nicht erfindungsgemäßen Profiliereinheit ist ein oszillieren der Platine, in diesem Fall also des Bandes, nicht möglich. Hierbei wird vorteilhafterweise ein ein- oder zweidimensionales Oszillieren der Erwärmungsmittel (Brenner, Induktor) durchgeführt, um den Wärmeeintrag gleichmäßig zu gestalten.

Die erfindungsgemäßen Erwärmungsmittel werden hierbei in Position und Leistung sowie die Oszillationsebene und das Oszillationsmuster an das Bauteil mit all seinen Eigenschaften (Löcher, Verprägungen, Ausklinkungen) angepasst.

In vorteilhafter Weise wird auch die Abkühlung hierbei oszillierend ausgebildet, um die gleichmäßige Abkühlung zu gewährleisten. Erfindungsgemäß können hierbei zum Beispiel Kühlflüssigkeitsstrahlen eingesetzt werden, wobei die Kühlflüssigkeitsstrahlen mit sogenannten Rotationsdüsen aufgebracht werden können. Ähnlich wie bei der Erwärmung, jedoch ohne die Einschränkung der Produktkomplexität können hier aber auch Flachsprühdüsen einachsig oszillierend verwendet werden.

Erfindungsgemäß sind die Heiz- und Kühlleistungen beim Start-Stop-Betrieb bei vergleichbarem Bauteildurchsatz deutlich höher, da nur die Zeit zwischen dem Profilierzeiten für die Wärmebehandlung zur Verfügung steht. Bei größeren Bauteildicken kann es erforderlich sein, diese Erwärmung auf zwei oder mehr Bandstops zu verteilen, damit das Material auch ausreichend durcherwärmt wird. Die mittlere Leistung ist wieder auf üblichem Niveau, da die Transportzeit = Profilierzeit ja ohne Erwärmung durchgeführt wird. Je nach Bauteillänge und maximaler Profiliergeschwindigkeit kann es hier zu teilweise beträchtlichen Transferzeiten von der Austenitisierungszone hin zur Abschreckzone kommen. Ab dem Überschreiten einer kritischen maximalen Transferzeit ist es dann erforderlich, einen stärker umwandlungsverzögerten Werkstoff einzusetzen.

Üblicherweise werden Manganborstähle wie ein 22MnB5 eingesetzt, durch die Verwendung eines stärker umwandlungsverzögerten Werkstoffes wie ein 20MnB8 kann die Zeitreserve im Prozessfenster noch erhöht werden. Im Bedarfsfall kann natürlich der Werkstoff hinsichtlich bsp. unter anderem des Kohlenstoffanteils angepasst werden um die Festigkeit auf die Anforderungen (für manchen Anwendung kann das Zugfestigkeiten von 2000 MPa und mehr bedeuten) anzupassen.

Beispielhaft zur Veranschaulichung des Leistungsbedarf bei kontinuierlichen Betrieb im Vergleich zum Start-Stop Betrieb:

$$P_{kontinuierlich} = A \cdot \rho \cdot \eta \cdot v \cdot \int_{RT}^{ZT} c_p \, dT$$

$$\bar{P}_{kontinuierlich} = P_{kontinuierlich} \cdot \frac{l_{hart}}{l_{hart} + l_{weich}}$$

$$P_{Start-Stop} = \frac{A \cdot \rho \cdot \eta \cdot l_{hart}}{t_{Haltezeit}} \cdot \int_{RT}^{ZT} c_p \, dT$$

$$\bar{P}_{Start-Stop} = P_{Start-Stop} \cdot \frac{t_{Haltezeit}}{t_{Haltezeit} + t_{Profilierzeit}} \quad \text{mit} \quad \bar{v}_{Start-Stop} = \frac{l_{hart} + l_{weich}}{t_{Haltezeit} + t_{Profilierzeit}}$$

$$L := A \cdot \rho \cdot \eta \cdot \int_{RT}^{ZT} c_p \, dT$$

Beispiel: Zykluszeit 10s, Bauteillänge 1m, 50%hart

$$v_{kontinuierlich} = 0.1 \, m/s \qquad P_{kontinuierlich} = 0.1 \cdot L \qquad \bar{P}_{kontinuierlich} = 0.05 \cdot L$$

2s Haltezeit, 10s Zykluszeit, Bauteillänge 1m, 50% hart $\bar{v}_{Start-Stop} = 0.1 \, ^m/_s$

$$P_{Start-Stop} = L \cdot \frac{0.5}{2} = 0.25 \cdot L \qquad \bar{P}_{Start-Stop} = 0.25 \cdot L \cdot \frac{2}{10} = 0.05 \cdot L$$

**Patentansprüche**

1. Verfahren zum Schnellerwärmen von Stahlblechprofilen oder Stahlrohren mit nachfolgender Abschreckhärtung, wobei Erwärmungseinrichtungen (1, 20, 21) vorhanden sind und die Erwärmungseinrichtungen (1, 20, 21) jeweils flächenmäßig begrenzt ein Aufheizen des Stahlblechprofils oder des Stahlrohres bewirkend auf das Stahlblechprofil oder das Stahlrohr einwirken, wobei die Erwärmungseinrichtungen (1, 20, 21) in Bezug zum Stahlblechprofil oder zum Stahlrohr oszillieren, wobei der Frequenzbereich der Oszillation 0,46 bis 4,7 Hz beträgt, wobei eine überlagerte Oszillation durchgeführt wird, bei der eine Grundschwingung von einer höher frequenten Oberschwingung überlagert wird, wobei die Oszillation translatorisch, rotatorisch oder eine Kombination von beiden ist.

2. Verfahren nach Anspruch 1, wobei während der Oszillation möglichst gleichmäßige Bewegungen, um die Beschleunigungskräfte gering zu halten, durchgeführt werden, wobei vorzugsweise möglichst kreisförmige, linear sinusförmige oder doppelt kreisförmige Oszillationsmuster erzeugt werden.

3. Verfahren nach Anspruch 1 oder 2, wobei die Grundschwingung 0,5 Hz und die kleine Oberschwingung 2 Hz beträgt, wobei die Erwärmungseinrichtungen punkförmige Wärmequellen sind.

4. Verfahren nach Anspruch 1 oder 2, wobei das Verhältnis Grundschwingung zu Oberschwingung von 1:5 bis 1:10 beträgt.

5. Verfahren nach einem der vorhergehenden Ansprüche, wobei die Einrichtungen zum Bewirken der Erwärmung Brenner (1) sind.

6. Verfahren nach einem der vorhergehenden Ansprüchen, wobei die Einrichtungen zum Erzeugen der Erwärmung (1, 20, 21) in Reihen angeordnet sind und eine Mehrzahl von Reihen zu einem Brennerfeld (11) oder Feld von Querfeldinduktoren ausgebildet ist.

7. Verfahren nach Anspruch 5, wobei mit den Brennern (1) allseitig auf die Stahlblechprofile oder Stahlrohre zum Zwecke der Abschreckhärtung eingewirkt wird, so dass die Stahlblechprofile oder Stahlrohre im zu härtenden Bereich erwärmt werden.

8. Verfahren nach einem der vorhergehenden Ansprüche, wobei die Einrichtungen zum Bewirken der Erwärmung (1, 20, 21) in einem Rechteck oder Wabenmuster verteilt angeordnet werden.

9. Verfahren nach einem der vorhergehenden Ansprüche, wobei in den Bereichen des Stahlblechprofils oder Stahlrohrs, die nicht austenitisiert werden, bereichsweise zumindest eine Kühleinrichtung, bspw. zumindest eine Kühldüse vorgesehen ist, um eine aktive Kühlung dieses Bereichs zu gewährleisten.

10. Verfahren nach Anspruch 9, wobei die Kühlung durch zumindest durch einen Brenner strömendes Kühlgas bewirkt wird.

11. Verfahren nach Anspruch 1, wobei nach dem Aufheizen des Stahlblechprofils oder des Stahlrohres das Profil oder Rohr mit einer Kühleinrichtung abgeschreckt wird, wobei die Abschreckung mit einer Flüssigkeit oder Gas erfolgt.

12. Verfahren nach Anspruch 11, wobei die Kühleinrichtung über zumindest eine Kühldüse verfügt, welche auf das Profil oder das Rohr einwirkt.

13. Verfahren nach Anspruch 11 oder 12, wobei die Kühleinrichtung oszilliert, insbesondere überlagert oszilliert.

14. Vorrichtung zum Schnellerwärmen von Stahlblechprofilen oder Stahlrohren zum Durchführen des Verfahrens nach Anspruch 1, **dadurch gekennzeichnet, dass** die Vorrichtung Einrichtungen zum Bewirken einer Erwärmung des Stahlblechprofils oder Stahlrohres umfasst, wobei die Einrichtungen Brenner (1) und/oder Querfeldinduktoren (20, 21) sind, wobei die Brenner (1) einzeln abhebbar sind, wobei zumindest eine Kühleinrichtung zum Zwecke der Abschreckung vorgesehen ist, wobei die Kühleinrichtung über zumindest eine Kühldüse verfügt, wobei die Abschreckung mit einer Flüssigkeit oder Gas erfolgt, wobei eine Einrichtung zum Oszillieren der Erwärmungseinrichtungen (1, 20, 21) und eine Einrichtung zum Oszillieren der Kühleinrichtung vorhanden ist, wobei die Einrichtungen zur Ausführung einer Mehrfachoszillation mit einer Grundschwingung und einer überlagerten Oberschwingung ausgebildet sind.

**Claims**

1. Method for rapid heating of steel sheet profiles or steel pipes with subsequent quench hardening, wherein heating devices (1, 20, 21) are present and the heating devices (1, 20, 21) respectively act on the steel sheet profile or steel pipe to a limited extent in terms of area, causing the steel sheet profile or steel pipe to heat up, wherein the heating devices (1, 20, 21) oscillate relative to the steel sheet profile or to the steel pipe, wherein the frequency range of the oscillation is 0.46 to 4.7 Hz, wherein a superimposed oscillation is performed in which a fundamental is superimposed by a higher-frequency harmonic, wherein the oscillation is translational, rotational or a combination of both.

2. Method according to Claim 1, wherein during the oscillation, movements are carried out as uniformly as possible to keep the acceleration forces low, wherein preferably circular, linear sinusoidal or double circular oscillation patterns are generated as far as possible.

3. Method according to Claim 1 or 2, wherein the fundamental is 0.5 Hz and the small harmonic is 2 Hz, wherein the heating devices are point heat sources.

4. Method according to Claim 1 or 2, wherein the ratio of the fundamental to the harmonic is 1:5 to 1:10.

5. Method according to one of the preceding claims, wherein the devices for creating heat are burners (1).

6. Method according to one of the preceding claims, wherein the devices for generating the heating (1, 20, 21) are arranged in rows and a plurality of rows is formed into a burner field (11) or field of cross-field inductors.

7. Method according to Claim 5, wherein the burners (1) act on all sides of the steel sheet profiles or steel pipes for the purpose of quench hardening such that the steel sheet profiles or steel pipes are heated in the area to be hardened.

8. Method according to one of the preceding claims, wherein the devices for producing heating (1, 20, 21) are arranged distributed in a rectangle or honeycomb pattern.

9. Method according to one of the preceding claims, wherein in the areas of the steel sheet profile or steel pipe that are not austenitised, at least one cooling device, for example at least one cooling nozzle, is provided in order to ensure active cooling of this area.

10. Method according to Claim 9, wherein the cooling is achieved by cooling gas flowing through at least one burner.

11. Method according to Claim 1, wherein after the steel sheet profile or steel pipe has been heated, the profile or pipe is quenched with a cooling device, wherein the quenching is carried out with a liquid or gas.

12. Method according to Claim 11, wherein the cooling device has at least one cooling nozzle, which acts on the profile or pipe.

13. Method according to Claim 11 or 12, wherein the cooling device oscillates, in particular oscillates in a superimposed manner.

14. Device for rapid heating of steel sheet profiles or steel pipes for carrying out the method according to Claim 1, **characterized in that** the device comprises devices for heating the steel sheet profile or steel pipe, wherein the devices are burners (1) and/or cross-field inductors (20, 21), wherein the burners (1) can be lifted off individually, wherein at least one cooling device is provided for the purpose of quenching, wherein the cooling device has at least one cooling nozzle, wherein the quenching is carried out with a liquid or gas, wherein there is a device for oscillating the heating devices (1, 20, 21) and a device for oscillating the cooling device, wherein the devices are designed to perform a multiple oscillation with a fundamental and a superimposed harmonic.

**Revendications**

1. Procédé de réchauffage rapide de profilés en feuille d'acier ou de tubes en acier avec durcissement par trempe subséquent, dans lequel des dispositifs de réchauffage (1, 20, 21) sont présents et les dispositifs de réchauffage (1, 20, 21) agissent sur le profilé en feuille d'acier ou le tube en acier en provoquant un chauffage limité en surface du profilé en feuille d'acier ou du tube en acier, dans lequel les dispositifs de réchauffage (1, 20, 21) oscillent par rapport au profilé en feuille d'acier ou au tube en acier, la plage de fréquences de l'oscillation étant de 0,46 à 4,7 Hz, une oscillation superposée étant effectuée, dans laquelle une oscillation fondamentale est superposée à une oscillation harmonique de fréquence plus élevée, l'oscillation étant translatoire, rotatoire ou une combinaison des deux.

2. Procédé selon la revendication 1, dans lequel, pendant l'oscillation,
des mouvements aussi réguliers que possible sont effectués pour maintenir les forces d'accélération à un faible niveau, en générant de préférence des modèles d'oscillation aussi circulaires que possible, sinusoïdaux linéaires ou doublement circulaires.

3. Procédé selon la revendication 1 ou 2, dans lequel la vibration fondamentale est de 0,5 Hz et la petite vibration harmonique est de 2 Hz, les moyens de réchauffage étant des sources de chaleur en forme de points.

4. Procédé selon la revendication 1 ou 2, dans lequel le rapport entre l'oscillation fondamentale et l'oscillation harmonique est de 1:5 à 1:10.

5. Procédé selon l'une quelconque des revendications précédentes, dans lequel les moyens pour effectuer le réchauffage sont des brûleurs (1).

6. Procédé selon l'une quelconque des revendications précédentes, dans lequel les dispositifs pour générer le réchauffage (1, 20, 21) sont disposés en rangées et une pluralité de rangées est formée en un champ de brûleurs (11) ou en un champ d'inducteurs à champ transversal.

7. Procédé selon la revendication 5, dans lequel les brûleurs (1) agissent de tous côtés sur les profilés en feuille d'acier ou les tubes en acier en vue du durcissement par trempe, de sorte que les profilés en feuille d'acier ou les tubes en acier sont réchauffés dans la zone à tremper.

8. Procédé selon l'une quelconque des revendications précédentes, dans lequel les moyens pour réaliser le réchauffage (1, 20, 21) sont répartis selon un rectangle ou un motif en nid d'abeilles.

9. Procédé selon l'une quelconque des revendications précédentes, dans lequel, dans les zones du profilé en feuille d'acier ou du tube en acier qui ne sont pas austénitisées, il est prévu par zones au moins un dispositif de refroidissement, par exemple au moins une buse de refroidissement, afin de garantir un refroidissement actif de cette zone.

10. Procédé selon la revendication 9, dans lequel le refroidissement est effectué par un gaz de refroidissement s'écoulant à travers au moins un brûleur.

11. Procédé selon la revendication 1, dans lequel, après le réchauffage du profilé en feuille d'acier ou du tube en acier, le profilé ou le tube est trempé avec un dispositif de refroidissement, la trempe étant effectuée avec un liquide ou un gaz.

12. Procédé selon la revendication 11, dans lequel le dispositif de refroidissement dispose d'au moins une buse de refroidissement qui agit sur le profilé ou le tube.

13. Procédé selon la revendication 11 ou 12, dans lequel le dispositif de refroidissement oscille, en particulier oscille de manière superposée.

**14.** Dispositif pour le réchauffage rapide de profilés en feuille d'acier ou de tubes en acier pour la mise en oeuvre du procédé selon la revendication 1, **caractérisé en ce que** le dispositif comprend des dispositifs pour provoquer un réchauffage du profilé en feuille d'acier ou du tube en acier, les dispositifs étant des brûleurs (1) et/ou des inducteurs à champ transversal (20, 21), les brûleurs (1) pouvant être soulevés individuellement, au moins un dispositif de refroidissement étant prévu dans le but d'une trempe, le dispositif de refroidissement disposant d'au moins une buse de refroidissement, la trempe s'effectuant avec un liquide ou un gaz, un dispositif pour faire osciller les dispositifs de réchauffage (1, 20, 21) et un dispositif pour faire osciller le dispositif de refroidissement étant présents, les dispositifs étant conçus pour exécuter une oscillation multiple avec une oscillation fondamentale et une oscillation harmonique superposée.

FIG. 1

FIG. 2

FIG. 3

FIG. 4

FIG. 5

FIG. 6

FIG. 7

FIG. 8

FIG. 9

X: Radius grosser Kreis

Y: Radius kleine Kreise

Z: Inhomogenitaet

X: 17
Y: 33
Z: 0.01297

X: 36
Y: 36
Z: 0.01678

X: 22
Y: 17
Z: 0.009958

FIG. 10

FIG. 11

FIG. 12

FIG. 13

FIG. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011053698 B3
- DE 102010049640 B4
- DE 3536609 A1
- DE 102010049640 A1
- US 4010969 A
- DE 4401228 A1
- DE 3929829 A1